(19) Europäisches Patentamt

European Patent Office

Office européen des brevets

(11) **EP 0 894 833 B1**

(12) **EUROPÄISCHE PATENTSCHRIFT**

(45) Veröffentlichungstag und Bekanntmachung des Hinweises auf die Patenterteilung:
**27.09.2006  Patentblatt 2006/39**

(51) Int Cl.:
*C09C 1/02* (2006.01)          *C09C 3/04* (2006.01)
*C09D 7/12* (2006.01)          *D21H 17/67* (2006.01)
*D21H 19/38* (2006.01)

(21) Anmeldenummer: **98114080.9**

(22) Anmeldetag: **28.07.1998**

(54) **Pigment-Trockenprodukt, enthaltend ein agglomeriertes carbonathaltiges Pigment**

Dry pigment product containing an agglomerated carbonate containing pigment

Produit pigmentaire sec contenant un pigment carbonaté aggloméré

(84) Benannte Vertragsstaaten:
**AT BE CH DE DK ES FI FR GB IT LI NL PT SE**

(30) Priorität: **28.07.1997  DE 19732429**

(43) Veröffentlichungstag der Anmeldung:
**03.02.1999  Patentblatt 1999/05**

(73) Patentinhaber: **OMYA AG**
**4665 Oftringen (CH)**

(72) Erfinder:
 • **Weitzel, Hans-Joachim**
  **4806 Wikon (CH)**
 • **Wermuth, Claude**
  **4628 Wolfwil (CH)**
 • **Strauch, Dieter**
  **4800 Zofingen (CH)**
 • **Gysau, Detlef**
  **4800 Zofingen (CH)**

(74) Vertreter: **Reinhard - Skuhra - Weise & Partner**
**Postfach 44 01 51**
**80750 München (DE)**

(56) Entgegenhaltungen:
**EP-A- 0 246 406          EP-A- 0 531 685**
**DE-A- 2 808 425          GB-A- 1 401 145**
**GB-A- 2 275 876**

 • **DATABASE WPI Section Ch, Week 199440 Derwent Publications Ltd., London, GB; Class A82, AN 1994-322717 XP002118081 & JP 06 248598 A (OJI PAPER CO), 6. September 1994 (1994-09-06)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Pigment-Trockenprodukt, sowie Verfahren zu dessen Herstellung sowie dessen Verwendung bei der Papierherstellung und in der Farben- und Lackindustrie.

Mineralische Füllstoffe und Pigmente sind relativ billige Stoffe, die man z.B. Werkstoffen, Anstrichstoffen, Papier, Kunststoffen und dergleichen beimischt, um deren Volumen und/oder Gewicht zu erhöhen, aber auch oft, um die technische Verwendbarkeit zu verbessern.

Die Begriffe Füllstoff und Pigment werden oft als Synonyme gebraucht. Es wird in dieser Schrift keine technische oder inhaltliche Unterscheidung vorgenommen.

Eine Gruppe von Calciumcarbonatpigmenten besteht z.B. aus natürlich vorkommendem Material. Hierzu gehören Kalkstein, Marmor, Kreide sowie die Schalen von im Meer und an den Küsten lebenden Organismen, z.B. Austernschalen.

Mineralische Füllstoffe müssen im allgemeinen vermahlen werden, um sie für die verschiedenen Anwendungsmöglichkeiten geeignet zu machen. Handelsübliche carbonathaltige Füllstoffe werden nach dem Stand der Technik folgendermassen aufbereitet:

Carbonathaltige Rohstoffe werden weltweit im Tagbau oder Untertagbau abgebaut. Die abgebauten carbonathaltigen Rohstoffe versetzt mit anorganischen oder organischen Verunreinigungen je nach Abbaugebiet, werden gereinigt und anschliessend trocken und/oder nass aufbereitet. Die Vormahlung erfolgt mittels Kugelmühlen-Mahlung und, falls erforderlich, anschliessender Flotation.

An solchen Ausgangsmaterialien wird eine weitere Nassvermahlung bei Feststoffgehalten von 30 - 75 Gew. % mittels Rührwerkskugelmühlen vorgenommen. Dabei können die Bedingungen so gewählt werden, dass Produkte mit Feinheiten von 50 - 100 Gew.% < 2 $\mu$m, mit und ohne Dispergiermittel resultieren.

Aus der US 4 767 464 sind bereits carbonathaltige Pigmente bekannt, die z. B. in Farben und Papieren verwendet werden können.

Aus der DE 4 128 570 A1 ist bereits ein Slurry bekannt, enthaltend carbonathaltige mineralische Füllstoffe, Pigmente oder ähnliche Materialien, der in der Papierindustrie verwendet werden kann.

Ganz allgemein kann man sagen, dass die Teilchengrösse einen erheblichen Einfluss auf die Eigenschaften des den Füllstoff enthaltenden Produktes, z.B. auf die Opazität hat. Mineralische Füllstoffe, auch wenn sie sehr fein vermahlen worden sind, beeinflussen auch immer noch negativ die Güte von Produkten, z.B. die Opazität von Papieren oder das Deckvermögen von Farben. Nach dem Stande der Technik hat man deshalb auf verschiedene Weise versucht, die Eigenschaften von mineralischen Füllstoffen, insbesondere bei der Verwendung in Farben und in Papiermassen, zu verbessern, insbesondere die Opazität zu verbessern.

Dabei hat man auch bereits versucht, den Anteil an Teilchen kleiner 0,2 $\mu$m so niedrig wie möglich zu halten, möglichst auf Null zu stellen. Verwiesen sei auf die DE 28 08 425, die einen mineralischen Füllstoff beschreibt, bei welchem der obere Schnitt 2 $\mu$m ist, 85 - 95 Gew.% Teilchen < 1 $\mu$m und möglichst keine Teilchen < 0,2 $\mu$m enthalten sind.

Diese Versuche haben bisher zu unbefriedigenden Ergebnissen geführt. Man hat deshalb präzipitierte Calciumcarbonate (im folgenden PCC abgekürzt) eingesetzt, um bei Papieren eine höhere Opazität als mit natürlichen Calciumcarbonaten zu erreichen.

Aber diese präzipitierten Calciumcarbonate weisen ihrerseits Nachteile auf, die dem Fachmann bekannt sind, z.B. schlechtere Entwässerung auf der Papiermaschine und schlechtere Festigkeitseigenschaften der Papiere.

Bei Trockenprodukten ist man zusätzlich auf eine gute Verarbeitbarkeit angewiesen. Das heisst der Fliessfähigkeit und der Bewegungsfähigkeit von Pulvern muss speziell Rechnung getragen werden.

Eine Erhöhung der Schüttdichte führt zu einer Erhöhung der Transportkapazität bei vorgegebenen Tank- oder Silovolumen, was zu einer Erniedrigung der Transportkosten führt. Parallel dazu wird die Kapazität bestehender Lager erhöht.

Eine weitere Forderung an Füllstoffe speziell in Farben ist eine hohe Nassabriebfestigkeit.

Diese Anforderungen konnten bis heute weder durch bekannte natürliche Calciumcarbonate mit hoher Opazität noch durch präzipitierte Calciumcarbonate befriedigend erfüllt werden.

Eine Aufgabe der vorliegenden Erfindung ist es daher, ein Pigment-Trockenprodukt für den Einsatz in Farben und die Papierherstellung zu schaffen, das gegenüber dem Stand der Technik vorteilhaft ist.

Diese Aufgabe wird erfindungsgemäss durch ein Pigment-Trockenprodukt gelöst, das dadurch gekennzeichnet ist, dass es besteht aus 96 - 100 Gew.% agglomeriertem, carbonathaltigem Pigment und 0 - 4 Gew. Restfeuchte an Wasser, wobei das agglomerierte carbonathaltige Pigment folgende Feinheitsmerkmale

a) 80 - 99 Gew.% < 2 $\mu$m

b) 50 - 90 Gew.% < 1 $\mu$m

c) 0 - 10 Gew.% < 0,2 $\mu$m und

d) einen Steilheitsfaktor von 1,5 - 2,0 und

e) eine Porosität von 45 - 65 % aufweist.

Vorzugsweise sind Pigmente mit folgender Feinheit

a) 82 - 98 Gew.% < 2 $\mu$m
b) 51 - 89 Gew.% < 1 $\mu$m
c) 0 - 9 Gew.% < 0,2 $\mu$m, bevorzugter

a) 83 - 98 Gew.% < 2 $\mu$m
b) 54 - 88 Gew.% < 1 $\mu$m
c) 0 - 8 Gew.% < 0,2 $\mu$m, und bevorzugt
a) 84 - 97 Gew.% < 2 $\mu$m
b) 55 - 85 Gew.% < 1 $\mu$m
c) 0 - 7 Gew.% < 0,2 $\mu$m

enthalten.

Vorzugsweise liegt der Steilheitsfaktor in einem Bereich von 1,5 - 1,9. Sehr gute Ergebnisse werden mit einem Steilheitsfaktor von 1,5 - 1,8 erzielt. Ganz besonders gute Ergebnisse stellen sich bei einem Steilheitsfaktor von 1,5 - 1,75 ein.

Vorzugsweise beträgt die Porosität 47 - 65 %, bevorzugter ist eine Porosität von 49 - 63 % und bevorzugt ist eine Porosität von 51 - 61 %.

Vorzugsweise bestehen die carbonathaltigen Pigmente aus Kreide und/oder Kalkstein und/oder Marmor und/oder dolomithaltigem Calciumcarbonat und/oder Dolomit oder aus natürlicher Kreide und/oder Kalkstein und/oder Marmor und/oder dolomithaltigem Calciumcarbonat und/oder Dolomit.

Die in der vorstehend offenbarten Lösung der gestellten Aufgabe enthaltenen Fachausdrücke werden im folgenden unter Verwendung von der Fachwelt bekannten Begriffen und der Fachwelt ohne weiteres zugänglichen Literaturstellen definiert, wobei auch die Messverfahren beschrieben werden:

Verwendete Messverfahren:

**Korngrössenverteilung:**

Alle in der vorliegenden Patentanmeldung genannten Feinheitsmerkmale der erfindungsgemäss hergestellten Produkte und der Vergleichsprodukte, wurden durch Sedimentationsanalyse im Schwerefeld mit dem Sedigraph 5100 der Firma Micromeritics, USA bestimmt. Dieses Gerät ist dem Durchschnittsfachmann bekannt und wird weltweit zur Bestimmung der Feinheit von Füllstoffen und Pigmenten verwendet.

Die Proben wurden folgendermassen für die Feinheitsbestimmung vorbereitet:

Eine 3 g (atro) carbonathaltiges Pigment enthaltende Slurry-Probe wurde mit 0,1 Gew.% Polyacrylsäure versetzt. Diese Probe wird mit einer 0,3 %igen, wässrigen kationischen Dispergiermittellösung auf 75 ml aufgefüllt und mittels Schnellrührer (20'000 upm) während 1 min. und mittels Ultraschall während 10 min. dispergiert.

Als kationische Dispergiermittellösung wurde verwendet:

Ein Co-Polymer besteht aus:

a) N-propyl-N'-trimethyl-amino-acrylsäureamid und
b) einer Polyacrylsäure.

Das Verhältnis a) zu b) ist idealerweise bei 95 Mol%, zu 5 Mol%.

Die gemessene Korngrössenverteilung wird als Durchgangssummenkurve und in tabellarischer Form ausgedrückt.

Der Resultatausdruck kann so programmiert werden, dass alle enthaltenen Feinheitsmerkmale direkt abgelesen werden können.

**Steilheitsfaktor:**

Der Steilheitsfaktor errechnet sich nach folgender Formel:

$$\text{Steilheitsfaktor} = \frac{\text{Teilchendurchmesser in } \mu m \text{ bei 50 Gew.\%}}{\text{Teilchendurchmesser in } \mu m \text{ bei 20 Gew.\%}}$$

**Porosität:**

Die Messung der Porosität erfolgt mit dem Hg-Pore Sizer 9310, der Firma Micromeritics, USA.

Das Messverfahren beruht auf dem kontinuierlichen Eindringen von Quecksilber in die offenen Poren einer Probe oder eines Körpers unter Vakuum bis 20 psia (entspricht 138 kPa) sowie mittels Hochdruck bis 25'000 psia (entspricht 172'400 kPa).

Nach Washburn ist der Druck dem Durchmesser eines zylindrischen Körpers, welcher das Eindringen von Quecksilber zulässt, gemäss untenstehender Gleichung umgekehrt proportional. Das eingedrungene Quecksilber-Volumen wird als kumulatives Porenvolumen pro Gramm der Probe über der Kapazitätsänderung in $cm^3/g$ ermittelt.

$$\text{Porendurchmesser} = \frac{-4 \cdot \gamma \cdot \cos \sigma}{\text{Druck}}$$

$\gamma$ = Oberflächenspannung von Quecksilber
$\sigma$ = Kontaktwinkel zwischen Quecksilber und Prüfmaterial
Der Kontaktwinkel liegt idealerweise bei 130°

Die prozentuelle Porosität der Probe wird nach folgender Formel berechnet:

$$P = \frac{\text{Gesamt } V_P - \text{Makro } V_P}{\text{Mikro } V_P - \dfrac{1}{\rho_M}}$$

Gesamt $V_P$ = Gesamtporenvolumen pro Menge Probe in $cm^3/g$
Makro $V_P$ = Volumen der Makroporen pro Menge Probe in $cm^3/g$
Mikro $V_P$ = Volumen der Mikroporen pro Menge Probe in $cm^3/g$ $\rho_M$ = Dichte der Probe in $g/cm^3$
Dabei werden Poren > 10 $\mu m$ als Makroporen betrachtet.

**Restfeuchte des Trocken-Pigmentes:**

Die Feuchte des Trockenproduktes wird mittels einer infrarotbeheizten Trockenwaage vom Typ Sartorius MA30 der Firma Sartorius AG, Göttingen, D, bestimmt.

Etwa 2 g des zu prüfenden Pulvers werden in eine Aluminiumschale gegeben. Die Trockenwaage zeigt direkt den Gewichtsverlust durch das bei 150°C verdampfte Wasser in Prozent an.

**Fliess- und Bewegungsfähigkeit von Pulvern:**

Fliessfähigkeit und Bewegungsfähigkeit von Pulvern lassen sich aus einer Reihe einzelner Parameter bestimmen. Dazu wurde ein "Powder Characteristics Tester" Modell PT-N der Firma Hosokawa Micron B.V., Doetinchem, NL, verwendet.

Das Gerät misst die Pulvereigenschaften automatisch nach den Vorgaben der Herstellerfirma. Die Ergebnisse werden als Zahlen in Form einer Tabelle und mit einem Stichwort als verbale Einstufung ausgedruckt.

Zur Bestimmung der **Fliessfähigkeit** werden die gewichteten Einzelwerte von Ruhewinkel, Spachtelwinkel, Kompressibilität und Kohäsion zu einem Fliessfähigkeits-Index berechnet.

a) Ruhewinkel $\alpha_R$. Der Ruhewinkel $\alpha_R$ ist definiert als derjenige Winkel, der sich bei vorsichtigem Aufbau eines Pulverkegels zwischen der Kegelspitze und einer darauf angelegten Horizontalen bildet.

b) Spachtelwinkel $\alpha_S$. Der Spachtelwinkel $\alpha_S$ ist definiert als der Winkel, der sich ergibt, wenn der deutlich mit Pulver überhäufte Spachtel aus der Pulvermasse senkrecht nach oben entfernt wird. Der Spachtelwinkel $\alpha_S$ wird analog dem Ruhewinkel $\alpha_R$ definiert und bestimmt.

c) Kompressibilität C. Die Kompressibilität eines Pulvers errechnet sich aus der Stampf- und der Schüttdichte nach der Formel

$$C = \frac{P - A}{P} \cdot 100\%$$

c1) Stampfdichte P. Die Stampfdichte P wird gemäss ISO 787/11 bestimmt. Es ist die scheinbare Dichte des Pulvers, das unter definierten Bedingungen gestampft wurde.
c2) Schüttdichte A. Die Schüttdichte A ist die scheinbare Dichte eines Pulvers, das lose geschüttet vorliegt.

d) Kohäsion K. Die Kohäsion K wird im Gerät PT-N dadurch bestimmt, dass das Pulver unter exakt definierten Bedingungen über verschiedene Siebe gerüttelt wird und die Rückstände einzeln gravimetrisch gemessen werden.

Zur Bestimmung der **Bewegungsfähigkeit** werden die gewichteten Einzelwerte von Fliessfähigkeit, Fallwinkel, Differenzwinkel, und Dispersität zu einem Bewegungsfähigkeits-Index berechnet.

a) Fliessfähigkeit. Für die Fliessfähigkeit wird der oben erhaltene Wert eingesetzt.

b) Fallwinkel $\alpha_F$. Vor der Bestimmung des Fallwinkels $\alpha_F$ wird der Pulverkegel im Messgerät unter Standardbedingungen gerüttelt. Der Fallwinkel wird analog dem Ruhewinkel definiert und gemessen.

c) Differenzwinkel $\alpha_D$. Der Differenzwinkel $\alpha_D$ errechnet sich aus dem Ruhe- und dem Fallwinkel $\alpha_D = \alpha_R - \alpha_F$

d) Dispersität D. Zur Bestimmung der Dispersität D werden in der Apparatur 10 g des Trockenproduktes durch einen Zylinder fallen gelassen. Die in einem darunterliegenden Uhrglas aufgefangene Menge M wird gewogen. D = (10 - M) · 10t

**Trocken-Deckvermögen:**

Das Trocken-Deckvermögen wird nach DIN 53140 gemessen.
Der zu prüfende Füllstoff wird in einer Standardfarbe eingesetzt, welche 46.5 Gew.% des carbonathaltigen Füllstoffes enthält. Diese Farbe wird mittels eines Spaltrakels mit einer Spalthöhe von 150 um auf einen Kontrastkarton gleichförmig aufgezogen und luftgetrocknet.
Das Trocken-Deckvermögen ist wie folgt definiert:

$$Trocken\text{-}Deckverm\ddot{o}gen = \frac{R_Y \text{ über schwarz}}{R_Y \text{ über Weiss}} \cdot 100\%$$

Die $R_Y$-Werte sind die gemessen Reflexionswerte auf einem Kontrastkarton über einem schwarzen, respektive einem weissen Hintergrund.

**Nass-Deckvermögen:**

Gleich wie bei der Bestimmung des Trocken-Deckvermögen wird ein Kontrastkarton mit der Standardfarbe bestrichen und luftgetrocknet. Der Karton wird anschliessend während 30 Minuten in Wasser eingelegt und das Nass-Deckvermögen unmittelbar danach in Anlehnung an DIN 53140 gemessen.

**Nassabriebfestigkeit:**

Eine hochgefüllte Innendispersionsfarbe wird mit 13 Gew.% des zu prüfenden Füllstoffes gemäss DIN 53778-W-M vorbereitet und geprüft.

Im folgenden wird die Herstellung der erfindungsgemässen Versuchsprodukte beschrieben:

Zunächst wird ein allgemeines erfindungsgemässes Herstellungsverfahren beschrieben, danach werden weitere Ausführungsformen des erfindungsgemässen Herstellungsverfahrens beschrieben, die sich auf die speziellen Verwendungen der erfindungsgemässen Produkte beziehen.

Allgemeines Herstellungsverfahren:

1) Nach dem Stand der Technik aufbereitetes Ausgangsmaterial (siehe oben S. 2) wird in einer weiteren Nassvermahlung, bei einem Feststoffgehalt von 25 - 40 Gew.%, mittels einer Rührwerkskugelmühle, mit Mahlkörpern von 1 - 2 mm Durchmesser, ohne Dispergiermittel auf eine Feinheit von 50 - 90 Gew.% < 1 $\mu$m aufgemahlen.

2) Die anschliessende thermische Behandlung ohne Dispergiermittel bewirkt die Agglomeration der ultrafeinen Teilchen des Pigments.

3) Der agglomerierte Slurry wird anschliessend mechanisch oder thermisch entwässert, z.B. mittels Zentrifugen, KammerFilterpressen oder thermischen Entwässerungsanlagen, nämlich auf 96 - 100 Gew.% Pigment.

Die Verfahrensstufe 2 (thermische Agglomerierung) wird im einzelnen wie folgt durchgeführt:

Der gemäss Verfahrensstufe 1 erhaltene Slurry wird in ein Rührgefäss mit guter Isolation, das beheizbar ist, eingetragen. Vorzugsweise ist das Rührgefäss so konstruiert, dass ein Wasserverlust während der Agglomerierung möglichst vermieden wird (z.B. wird eine Kondensationseinrichtung verwendet). Der Slurry wird nun bei einer Temperatur von 65°C bis 80°C über einen Zeitraum gerührt (vorzugsweise langsam gerührt) bis die erforderliche Agglomeration beendet ist. Dies wird dadurch kontrolliert, dass in geeigneten Zeitabständen, z.B. in einem 2-stündigen Rhythmus, Proben entnommen werden und deren Korngrössenverteilung gemessen wird. Wenn das Pigment des Slurrys die erfindungsgemässen Feinheitsmerkmale (Korngrössenverteilung und Steilheitsfaktor) aufweist, dann ist die Agglomerierung beendet.

**Herstellung der erfindungsgemässen Produkte**

**Beispiel 1:**

Aus 25 kg flotiertem, vorgemahlenem und trockenem norwegischem Marmor wurde durch Zugabe von Wasser ein mit 35 Gew.% Slurry der Feinheit $d_{50}$ = 12 $\mu$m (50 Gew.% < 12 $\mu$m) hergestellt. Dieser Slurry wurde in einer 12 l Rührwerkskugelmühle (Firma Drais) in Kreislauf-Fahrweise vermahlen. Die Mahlbedingungen wurden mit 10 m/s Umfangsgeschwindigkeit und 4 1/min Volumenstrom eingestellt.

Die ermittelte Feinheit nach 115 Minuten Mahldauer betrug: 96 Gew.% < 2 $\mu$m, 78 Gew.% < 1 $\mu$m, 11 Gew.% < 0,2 $\mu$m, Steilheitfaktor: 2.0.

Der Slurry wurde nun in einem 7 l Doppelwand-Gefäss thermisch bei 65°C weiterbehandelt, ohne Zugabe an Dispergierungsmittel.

Nach 20 Stunden thermischer Agglomerierung wurden folgende Feinheiten ermittelt:
76 Gew.% < 1 $\mu$m, 5 Gew.% < 0,2 $\mu$m, bei einem Steilheitsfaktor von 1,69.
Nach der erfindungsgemässen Entwässerung auf 97,5 Gew.% Feststoffgehalt betrug die Feinheit 94 Gew.% < 2 $\mu$m, 70 Gew.% < 1 $\mu$m, 27 Gew.% < 0,5 $\mu$m, 6 Gew.% < 0,2 $\mu$m, bei einem Steilheitsfaktor von 1,70.

**Beispiel 2:**

25 kg flotierter, vorgemahlener, trockener norwegischer Marmor wurden wie in Beispiel 1 während 180 Minuten vermahlen. Die resultierende Feinheit betrug: 98 Gew.% < 2 $\mu$m, 82 Gew.% < 1 $\mu$m, 15 Gew.% < 0,2 $\mu$m, der Steilheitsfaktor: 1,96 Nach 16 Stunden thermischer Agglomerierung betrug die Feinheit 81 Gew.% < 1 $\mu$m, 7 Gew.% < 0,2 $\mu$m und der Steilheitsfaktor 1,55. Nach der Entwässerung auf 99,8 Gew.% Feststoffgehalt betrug die Feinheit 94 Gew.% < 2 $\mu$m, 72 Gew.% < 1 $\mu$m, 32 Gew.% < 0,5 $\mu$m, 8 Gew.% < 0,2 $\mu$m, bei einem Steilheitsfaktor von 1,70.

**Beispiel 3:**

25 kg flotierter, vorgemahlener, trockener norwegischer Marmor wurden wie in Beispiel 1 vermahlen. Nach 180 Minuten Mahldauer wurden die Feinheits-Merkmale mit dem Sedigraphen 5100 bestimmt. Die Feinheit betrug 99 Gew.% < 2 $\mu$m, 90 Gew.% < 1 $\mu$m, 14 Gew.% < 0,2 $\mu$m, der Steilheitsfaktor 1.96. Der Slurry wurde anschliessend 20 Stunden in einem Doppelwandgefäss bei 65°C langsam gerührt und dabei agglomeriert. Erreicht wurde eine Feinheit von 87 Gew.% < 1 $\mu$m, 6 Gew.% < 0,2 $\mu$m und ein Steilheitsfaktor von 1,64. Durch Entwässerung wurde das Produkt auf einen Feststoffgehalt von 99,8 Gew.% gebracht. Die resultierende Feinheit betrug 97 Gew.% < 2 $\mu$m, 75 Gew.% < 1 $\mu$m 30 Gew.% < 0,5 $\mu$m und 7 Gew.% < 0,2 $\mu$m, der Steilheitsfaktor 1,77.

**Beispiel 4:**

25 kg flotierter, vorgemahlener, trockener norwegischer Marmor wurden, wie in Beispiel 1, während 115 Minuten vermahlen. Feinheit: 98 Gew.% < 2 $\mu$m, 82 Gew.% < 1 $\mu$m, 11 Gew.% < 0,2 $\mu$m, Steilheitsfaktor: 1,96. Nach 16 h thermischer Agglomerierung wurde folgende Feinheit bestimmt: 84 Gew.% < 1 $\mu$m, 5 Gew.% < 0,2 $\mu$m, Steilheitsfaktor: 1,66. Nach der Entwässerung auf 99,6 Gew.% betrug die Feinheit 94 Gew.% < 2 $\mu$m, 69 Gew.% < 1 $\mu$m, 29 Gew.% < 0,5 $\mu$m, 7 Gew.% < 0,2 $\mu$m und der Steilheitsfaktor 1,72.

Alle derart hergestellte Produkte finden als Trockenpigmente Verwendung.

**Anmerkung:**

Alle thermischen Agglomerierungen der Beispiele 1 - 4 wurden bei 65°C durchgeführt.

**Beschreibung der Vergleichsprodukte:**

Als Standardprodukte für natürliches Calciumcarbonat (NCC) wurden zwei kommerziell erhältliche Calciumcarbonate eingesetzt.

NCC 1: OMYACARB EXTRA-CL der Firma Clarianacal SA, L'Arboc, E. Die Feinheiten an diesem Produkt wurden wie folgt bestimmt: 89 Gew.% < 2 $\mu$m, 62 Gew.% < 1 $\mu$m, 29 Gew.% < 0,5 $\mu$m, 7 Gew.% < 0,2 $\mu$m und der Steilheitsfaktor 2,14. Der Trockengehalt beträgt 99,8 Gew.%.

NCC 2: SETACARB-OG, der Firma OMYA S.A., Orgon, F. Dieses Produkt weist folgende Feinheiten auf: 96 Gew.% < 2 $\mu$m, 79 Gew.% < 1 $\mu$m, 51 Gew.% < 0,5 $\mu$m, 28 Gew.% < 0,2 $\mu$m und der Steilheitsfaktor 3,06. Der Trockengehalt beträgt 99,8 Gew.%.

Als Vergleichsprodukt für präzipitiertes Calciumcarbonat (PCC) wurde ein an sich bekanntes Füllstoff-Handelsprodukt Socal P2 der Firma Solvay Alkali GmbH, Rheinberg, D, herangezogen. Dieses präzipitierte Calciumcarbonat, welches trocken (99,8 Gew.% Feststoffgehalt) vorliegt, wird als Standard für Farben mit hoher Opazität verwendet. Feinheitsmerkmale: 72 Gew.% < 2 $\mu$m, 34 Gew.% < 1 $\mu$m, 13 Gew.% < 0,5 $\mu$m, 0 Gew.% < 0,2 $\mu$m und Steilheitsfaktor: 2,16.

Tabelle 1: Feinheitsmerkmale der Beispiele und der Handelsprodukte

| Beispiele | Feststoff Gew.% | Feinheit< 2 $\mu$m, % | Feinheit< 1 $\mu$m, % | Feinheit< 0,5 $\mu$m, % | Feinheit< 0,2 $\mu$m, % | Steilheitsfaktor | Hg-Porositat, % |
|---|---|---|---|---|---|---|---|
| Nr. 1 | 97,5 | 94 | 70 | 27 | 6 | 1,70 | 55,6 |
| Nr. 2 | 99,8 | 94 | 72 | 32 | 8 | 1,70 | 56,0 |
| Nr. 3 | 99,8 | 97 | 75 | 30 | 7 | 1,77 | 53,2 |
| Nr. 4 | 99,6 | 94 | 69 | 29 | 7 | 1,72 | 55,2 |
| zum Vergleich: NCC 1 | 99,8 | 89 | 62 | 29 | 7 | 2,14 | 33,1 |

(fortgesetzt)

| Beispiele | Feststoff Gew.% | Feinheit< 2 μm, % | Feinheit< 1 μm, % | Feinheit< 0,5 μm, % | Feinheit< 0,2 μm, % | Steilheitsfaktor | Hg-Porositat, % |
|---|---|---|---|---|---|---|---|
| zum Vergleich: NCC 2 | 99,8 | 96 | 79 | 51 | 28 | 3,06 | 36,2 |
| zum Vergleich: PCC | 99,8 | 72 | 34 | 13 | 0 | 2,16 | 59,2 |

**Anwendungsbeispiele**

Tabelle 2: Prüfung des Deckvermögens, trocken und nass, in Standard-Dispersionsfarbe

| Beispiele | Trocken-Deckvermögen % | Nass-Deckvermögen % |
|---|---|---|
| Nr. 1 | 98,0 | 72,8 |
| Nr. 2 | 97,8 | 72,1 |
| Nr. 3 | 97,7 | 71,9 |
| Nr. 4 | 97, 9 | 72, 5 |
| zum Vergleich: NCC 1 | 93,6 | 63,1 |
| zum Vergleich: NCC 2 | 77,7 | 41,4 |
| zum Vergleich: PCC | 95,2 | 56,1 |

Die vorstehende Tabelle 2 zeigt in überzeugender Weise, dass die Aufgabe der vorliegenden Erfindung gelöst wurde, d.h. Pigment-Trockenprodukte der eingangs genannten Gattung für die Farbenherstellung zu schaffen, die ein möglichst hohes Trocken-Deckvermögen im Farbfilm ergeben, insbesondere zu höherem Trocken-Deckvermögen führen als handelsüblich verwendete natürliche Calciumcarbonate und handelsüblich verwendete präzipitierte Calciumcarbonate. Besonders das Nass-Deckvermögen konnte gegenüber handelsüblich verwendeten natürlichen Calciumcarbonaten und handelsüblich verwendeten präzipitierten Calciumcarbonaten deutlich erhöht werden.

Tabelle 3: Prüfung der Nassabriebfestigkeit nach DIN 53778 in einer hochgefüllten Innendispersionsfarbe

| Beispiele | Nassabriebfestigkeit nach 7 Tagen Anzahl Zyklen | Nassabriebfestigkeit nach 28 Tagen Anzahl Zyklen |
|---|---|---|
| Nr. 1 | 945 | 1185 |
| Nr. 2 | 842 | 1067 |
| Nr. 3 | 894 | 1132 |
| Nr. 4 | 902 | 1141 |
| zum Vergleich: NCC 1 | 1335 | 1376 |
| zum Vergleich: PCC | 819 | 849 |

Die in Tabelle 3 aufgeführten Resultate weisen für die steilen Trocken-Pigmente 1 - 4 gemäss DIN 53778 nach 28 Tagen eine Zyklenzahl von > 1000 auf. Damit wird das Kriterium der DIN 53778-W-M, nämlich das Qualitätsmerkmal "waschbeständig", erfüllt. Die handelsüblich verwendeten natürlichen Calciumcarbonate mit deutlich geringerer Opazität erfüllen das oben genannte Kriterium auch, jedoch nicht die handelsüblich verwendeten präzipitierten Calciumcarbonate, welche eine Nassabriebfestigkeit von < 1000 Zyklen aufweisen. Damit erfüllen die handelsüblich verwendeten präzipitierten Calciumcarbonate das Kriterium der DIN 53778-W-M in der erwähnten Dispersionsfarbe nicht.

Tabelle 4: Prüfung der Fliessfähigkeit von Trocken-Füllstoff

| Beispiele | Fliessfähigkeits- Index | Grad der Fliessfähigkeit |
|---|---|---|
| Nr. 1 | 62,0 | Normal |
| Nr. 4 | 61,5 | Normal |
| zum Vergleich: NCC 1 | 41,0 | Nicht gut |
| zum Vergleich: PCC | 42,0 | Nicht gut |

Die in der Erfindung beschriebenen sehr feinen Produkte weisen in Tabelle 4 überzeugender Weise einen guten Fliessfähigkeits-Index auf, der für Trocken-Füllstoffe dieser Feinheit aussergewöhnlich hoch ist. Die handelsüblich verwendeten natürlichen Calciumcarbonate und handelsüblich verwendeten präzipitierten Calciumcarbonate mit verwandtem Feinheitsbereich weisen mangelhafte Fliesseigenschaften auf.

Tabelle 5: Prüfung der Bewegungsfähigkeitfähigkeit von Trocken-Füllstoff

| Beispiele | Bewegungsfähigkeits- Index | Grad der Bewegungsfähigkeit |
|---|---|---|
| Nr. 1 | 73,0 | hoch |
| Nr. 4 | 72,0 | hoch |
| zum Vergleich: NCC 1 | 48,0 | gering |
| zum Vergleich: PCC | 48,5 | gering |

Weiterhin wird ein enorm hoher Bewegungsfähigkeits-Index in Tabelle 5 für die Trocken-Füllstoffe der eingangs erwähnten Gattung erzielt, was zu signifikanten Vorteilen bei pneumatischen Pumpprozessen wie beim Be- und Entladen von Tankfahrzeugen und Tankwagen führt, was sich in einer stark verkürzten Ladezeit äussert. Im direkten Vergleich haben die handelsüblich verwendeten natürlichen Calciumcarbonate und handelsüblich verwendeten präzipitierten Calciumcarbonate nur schlechte Bewegungsfähigkeit, was gleichbedeutend ist mit schlechter Handhabung.

Tabelle 6: Prüfung der Schüttdichte und Stampfdichte von Trocken-Füllstoff

| Beispiele | Schüttdichte g/cm$^3$ | Stampfdichte g/cm$^3$ |
|---|---|---|
| Nr. 1 | 0,52 | 0,63 |
| Nr. 4 | 0,50 | 0,61 |
| zum Vergleich: NCC 1 | 0,36 | 0,63 |
| zum Vergleich: NCC 2 | 0,42 | 0,70 |
| zum Vergleich: PCC | 0,30 | 0,57 |

Die in Tabelle 6 beschriebenen Resultate weisen deutliche Verbesserungen für die beschriebenen Produkte der vorliegenden Erfindung auf, insbesondere die Ergebnisse der Schüttdichte zeigen markant höhere Werte auf. Dadurch lassen sich bei gleichem Lade- und Lagervolumen höhere Nutzlasten in Silos und Transportbehältern erreichen, die durch die Produkte dieser Feinheit bisher nicht vollständig ausgelastet werden konnten. Diese Vorteile können mit den handelsüblich verwendeten natürlichen Calciumcarbonaten und handelsüblich verwendeten präzipitierten Calciumcarbonaten nicht erzielt werden.

Das erfindungsgemässe Pigment-Trockenprodukt kann vorteilhaft bei der Papierherstellung, insbesondere in der Papiermasse in gestrichenen Papieren und in Karton, sowie in der Farben- und Lack-Industrie, insbesondere zur Herstellung wässriger Anstrichsysteme verwendet werden.

**Patentansprüche**

1.  Pigment-Trockenprodukt, enthaltend ein carbonathaltiges Pigment,
    **dadurch gekennzeichnet,**

**dass** es besteht aus

96 - 100 Gew.% agglomeriertem, carbonathaltigem Pigment und 0 - 4 Gew.% Restfeuchte an Wasser
wobei das agglomerierte carbonathaltige Pigment folgende Feinheitsmerkmale

    a) 80 - 99 Gew.% < 2 $\mu$m
    b) 50 - 90 Gew.% < 1 $\mu$m
    c) 0 - 10 Gew.% < 0,2 $\mu$m und
    d) einen Steilheitsfaktor von 1,5 - 2,0 und
    e) eine Porosität von 45 - 65 % aufweist,

wobei sich die Porosität nach folgender Formel berechnet :

$$P = \frac{\text{Gesamt } V_P - \text{Makro } V_P}{\text{Mikro } V_P - \frac{1}{\rho_M}}$$

Gesamt $V_P$ = Gesamtporenvolumen pro Menge Probe in $cm^3$/g Makro $V_P$ = Volumen der Makroporen pro Menge
Probe in $cm^3$/g Mikro $V_P$ = Volumen der Mikroporen pro Menge Probe in $cm^3$/g
$\rho_M$ = Dichte der Probe in g/$cm^3$

**2.** Pigment-Trockenprodukt, nach Anspruch 1,
**dadurch gekennzeichnet,**
**dass** es besteht aus 96 - 100 Gew.% agglomeriertem carbonathaltigem Pigment,
0 - 4 Gew.% Restfeuchte an Wasser
wobei das agglomerierte carbonathaltige Pigment folgende Feinheitsmerkmale

    a) 80 - 99 Gew.% < 2 $\mu$m
    b) 50 - 90 Gew.% < 1 $\mu$m
    c) 0 - 10 Gew.% < 0,2 $\mu$m und
    d) einen Steilheitsfaktor von 1,5 - 2,0 und
    e) eine Porosität von 45 - 65 % aufweist,

wobei die Agglomerierung des carbonathaltigen Pigments **dadurch** bewirkt wird, dass zunächst aus einem an sich
bekannten Ausgangsmaterial durch Nassvermahlung bei einem Feststoffgehalt von 25 - 40 Gew.% ohne Dispergiermittel ein Slurry mit einem carbonathaltigen Pigment mit einer Feinheit von 50 - 90 Gew.% < 1 $\mu$m hergestellt
wird und dann dieser Slurry einer Wärmebehandlung unterworfen wird, bis die Agglomerierung beendet ist.

**3.** Pigment-Trockenprodukt nach Anspruch 1 oder 2,
**dadurch gekennzeichnet,**
**dass** die agglomerierten, carbonathaltigen Pigmente aus Kreide und/oder Kalkstein und/oder Marmor und/oder
dolomithaltigem Calciumcarbonat und/oder Dolomit und/oder natürlicher Kreide und/oder natürlichem Kalkstein und/
oder natürlichem dolomithaltigem Calciumcarbonat und/oder natürlichem Dolomit bestehen.

**4.** Pigment-Trockenprodukt nach einem oder mehreren der vorgehenden Ansprüche,
**dadurch gekennzeichnet,**
**dass** das agglomerierte carbonathaltige Pigment folgende Feinheitsmerkmale aufweist:

    a) 82 - 98 Gew.% < 2 $\mu$m
    b) 51 - 89 Gew.% < 1 $\mu$m
    c) 0 - 9 Gew.% < 0,2 $\mu$m, bevorzugter
    a) 83 - 98 Gew.% < 2 $\mu$m
    b) 54 - 88 Gew.% < 1 $\mu$m
    c) 0 - 8 Gew.% < 0,2 $\mu$m, bevorzugter
    a) 84 - 97 Gew.% < 2 $\mu$m
    b) 55 - 85 Gew.% < 1 $\mu$m

c) 0 - 7 Gew.% < 0,2 $\mu$m.

**5.** Pigment-Trockenprodukt nach einem oder mehreren der vorgehenden Ansprüche,
**dadurch gekennzeichnet,**
**dass** der Steilheitsfaktor 1,5 - 1,9, bevorzugter 1,5 - 1,8 und bevorzugt 1,5 - 1,75 beträgt.

**6.** Pigment-Trockenprodukt nach einem oder mehreren der vorgehenden Ansprüche,
**dadurch gekennzeichnet,**
**dass** die Porosität 47 - 65 %, bevorzugter 49 - 63 % und bevorzugt 51 - 61 % beträgt.

**7.** Verfahren zur Herstellung des Pigment-Trockenprodukts nach einem oder mehreren der vorhergehenden Ansprüche,
**dadurch gekennzeichnet,**

a) dass ein nach dem Stand der Technik aufbereitetes Ausgangsmaterial in einer Nassvermahlung bei einem Feststoffgehalt 25 - 40 Gew.% ohne Dispergiermittel auf eine Feinheit von 50 - 90 Gew.% < 1 $\mu$m aufgemahlen wird,
b) anschliessend die Agglomeration der ultrafeinen Teilchen durch thermische Behandlung durch Erwärmen des Slurry auf 65°C bis 80°C und Rühren des Slurry über einen Zeitraum durchgeführt wird, bis die Agglomerierung beendet ist. Wobei die Behandlung ohne Dispergiermittel bewirkt wird,
c) anschliessend der agglomerierte Slurry auf einen Feststoffgehalt von mindetens 96 Gew.% Pigment entwässert wird.

**8.** Verwendung des Pigment-Trockenprodukts nach einem oder mehreren der Ansprüche 1 bis 6 in der Farben- und Lack-Industrie, insbesondere zur Herstellung wässriger Anstrichsysteme sowie bei der Papierherstellung, insbesondere in der Papiermasse, in gestrichenen Papieren und in Karton.

**Claims**

**1.** Dry pigment product containing a carbonate-containing pigment, **characterised in that** it consists of
96-100 % by weight of agglomerated carbonate-containing pigment, and
0-4 % by weight remaining water moisture,
wherein the agglomerated carbonate-containing pigment has the following fineness characteristics

a) 80-99 % by weight < 2 $\mu$m
b) 50-90 % by weight < 1 $\mu$m
c) 0-10 % by weight < 0.2 $\mu$m, and
d) a contrast factor of 1.5-2.0, and
e) a porosity of 45-65 %,

wherein the porosity is calculated according to the formula:

$$P = \frac{V_P\ total - V_P\ macro}{V_P\ micro - \dfrac{1}{\rho_M}}$$

$V_P$ total = total pore volume per quantity of sample in $cm^3/g$
$V_P$ macro = volume of macropores per quantity of sample in $cm^3/g$
$V_P$ micro = volume of micropores per quantity of sample in $cm^3/g$
$\rho_M$ = sample density in $g/cm^3$

**2.** Dry pigment product according to claim 1, **characterised in that** it consists of 96-100 % by weight of agglomerated carbonate-containing pigment, and
0-4 % by weight remaining water moisture,

wherein the agglomerated carbonate-containing pigment has the following fineness characteristics

a) 80-99 % by weight < 2 $\mu$m
b) 50-90 % by weight < 1 $\mu$m
c) 0-10 % by weight < 0.2 $\mu$m, and
d) a contrast factor of 1.5-2.0, and
e) a porosity of 45-65 %,

and wherein the agglomeration of the carbonate-containing pigment is effected by wet grinding of a starting material known per se at a solid content of 25-40 % by weight without dispersant in order to prepare a slurry of a carbonate-containing pigment having a fineness of 50-90 % by weight < 1 $\mu$m, and then by subjecting said slurry to a heat treatment until agglomeration is complete.

3. Dry pigment product according to claims 1 or 2, **characterised in that** the agglomerated carbonate-containing pigments consist of chalk and/or limestone and/or marble and/or dolomitic calcium carbonate and/or dolomite and/or natural chalk and/or natural limestone and/or natural dolomitic calcium carbonate and/or natural dolomite.

4. Dry pigment product according to one or more of the preceding claims, **characterised in that**
said agglomerated carbonate-containing pigment shows the following fineness characteristics:

a) 82-98 % by weight < 2 $\mu$m
b) 51-89 % by weight < 1 $\mu$m
c) 0-9 % by weight < 0.2 $\mu$m, preferably
a) 83-98 % by weight < 2 $\mu$m
b) 54-88 % by weight < 1 $\mu$m
c) 0-8 % by weight < 0.2 $\mu$m, preferably
a) 84-97 % by weight < 2 $\mu$m
b) 55-85 % by weight < 1 $\mu$m
c) 0-7 % by weight < 0.2 $\mu$m.

5. Dry pigment product according to one or more of the preceding claims, **characterised in that**
said contrast factor is 1.5-1.9, preferably 1.5-1.8 and more preferably 1.5-1.75.

6. Dry pigment product according to one more of the preceding claims, **characterised in that**
said porosity is 47-65%, preferably 49-63%, and more preferably 51-61 %.

7. Process for the preparation of the dry pigment product according to one or more of the preceding claims, **characterised in that**

a) a starting material processed according to the prior art is subjected to wet grinding at a solid content of 25-40 % by weight without dispersant to obtain a fineness of 50-90% by weight < 1 $\mu$m,
b) subsequently, agglomeration of the ultrafine particles is effected by heat treating the slurry without added dispersant, wherein the treatment is carried out by heating the slurry to a temperature of from 65°C to 80°C and stirring of the slurry over a period of time until agglomeration is complete,
c) then, the agglomerated slurry is dewatered to obtain a solids content of at least 96% by weight of pigment.

8. Use of the dry pigment product according to one or more of the claims 1-6 in the paint and lacquer industry, in particular for the preparation of aqueous paint systems, as well as in the preparation of paper, in particular in the paper mass, in coated papers and in cardboards.

**Revendications**

1. Produit pigmentaire sec contenant un pigment carbonaté,
**caractérisé en ce qu'**il se compose de 96-100% en poids de pigment carbonaté aggloméré et de 0-4% en poids d'humidité résiduelle sous forme d'eau, dans lequel le pigment carbonaté aggloméré présente les caractéristiques granulométriques suivantes :

a) 80-99 % en poids < 2 $\mu$m
b) 50-90% en poids < 1 $\mu$m
c) 0-10% en poids < 0,2 $\mu$m, et
d) un facteur de pente de 1,5-2,0 et
e) une porosité de 45-65%,

dans lequel la porosité se calcule selon la formule suivante :

$$P = \frac{V_{P\ total} - V_{P\ macro}}{V_{P\ micro} - 1/\rho_M}$$

$V_{P\ total}$ = volume de pores total rapporté à la quantité d'échantillon, en cm$^3$/g
$V_{P\ macro}$ = volume des macropores rapporté à la quantité d'échantillon, en cm$^3$/g
$V_{p\ micro}$ = volume des micropores rapporté à la quantité d'échantillon, en cm$^3$/g
$\rho_M$ = densité de l'échantillon, en g/cm$^3$

2. Produit pigmentaire sec, selon la revendication 1,
**caractérisé en ce qu'**il se compose de 96-100% en poids de pigment carbonaté aggloméré, de 0-4% en poids d'humidité résiduelle sous forme d'eau,
dans lequel le pigment carbonaté aggloméré présente les caractéristiques granulométriques suivantes :

a) 80-99 % en poids < 2 $\mu$m
b) 50-90% en poids < 1 $\mu$m
c) 0-10% en poids < 0,2 $\mu$m, et
d) un facteur de pente de 1,5-2,0 et
e) une porosité de 45-65%,

dans lequel l'agglomération du pigment carbonaté est provoquée par le fait que dans un premier temps, on produit à partir d'un matériau de production connu en soi par broyage humide avec une teneur en solide de 25-40% en poids, sans agent dispersant une suspension d'un pigment carbonaté ayant une granulométrie de 50-90% en poids < 1 $\mu$m, puis on soumet cette suspension à un traitement thermique jusqu'à ce que l'agglomération soit terminée.

3. Produit pigmentaire sec, selon la revendication 1 ou 2,
**caractérisé en ce que** les pigments carbonatés agglomérés se composent de craie et/ou de calcaire et/ou de marbre et/ou de carbonate de calcium dolomitique et/ou de dolomite et/ou de craie naturelle et/ou de calcaire naturel et/ou de carbonate de calcium dolomitique naturel et/ou de dolomite naturelle.

4. Produit pigmentaire sec, selon une ou plusieurs des revendications précédentes,
**caractérisé en ce que** le pigment carbonaté aggloméré présente les caractéristiques granulométriques suivantes :

a) 82-98% en poids < 2 $\mu$m
b) 51-89% en poids < 1 $\mu$m
c) 0-9% en poids < 0,2 $\mu$m, de préférence
a) 83-98% en poids < 2 $\mu$m
b) 54-88% en poids < 1 $\mu$m
c) 0-8% en poids < 0,2 $\mu$m, tout particulièrement
a) 84-97% en poids < 2 $\mu$m
b) 55-85% en poids < 1 $\mu$m
c) 0-7% en poids < 0,2 $\mu$m

5. Produit pigmentaire sec, selon une ou plusieurs des revendications précédentes,
**caractérisé en ce que** le facteur de pente est de 1,5-1,9, plus préférentiellement de 1,5-1,8, et de préférence de 1,5-1,75.

6. Produit pigmentaire sec, selon une ou plusieurs des revendications précédentes, **caractérisé en ce que** la porosité est de 47-65%, plus préférentiellement de 49-63%, et de préférence de 51-61%.

7. Procédé de fabrication du produit pigmentaire sec, selon une ou plusieurs des revendications précédentes, **caractérisé en ce que**

> a) on broie un matériau de production déjà préparé selon l'état de la technique, par broyage humide avec une teneur en solide de 25-40% en poids, sans agent dispersant, jusqu'à une granulométrie de 50-90% en poids < 1 $\mu$m,
> b) on provoque ensuite une agglomération des particules ultra-fines par traitement thermique, ce traitement étant effectué par chauffage de la suspension à une température de 65°C à 80°C et agitation de la suspension jusqu'à ce que l'agglomération soit terminée,
> c) on sèche ensuite la suspension agglomérée jusqu'à une teneur en solide d'au moins 96% en poids de pigment.

8. Utilisation d'un produit pigmentaire sec selon une ou plusieurs des revendications 1 à 6 dans l'industrie des peintures et des laques, en particulier pour la fabrication de systèmes de peintures aqueuses ainsi que pour la fabrication de papier, en particulier pour la charge de masse du papier, pour les papiers couchés et pour le carton.